# EUROPEAN PATENT SPECIFICATION

(11) **EP 3 787 812 B1**
(45) Date of publication and mention of the grant of the patent: **10.07.2024**
(21) Application number: 19736482.1
(22) Date of filing: 09.04.2019
(51) Int. Cl.: B21C 37/04, B21C 37/15, B21C 1/00, B21C 1/22, A44C 27/00

(54) **METHOD FOR THE REALIZATION OF A TWO LAYER METAL WIRE MADE OF GOLD-BASED ALLOY AND OF SILVER**
VERFAHREN ZUR HERSTELLUNG EINES ZWEISCHICHTIGEN METALLDRAHTES AUS EINER GOLDBASIERTEN LEGIERUNG UND AUS SILBER
PROCÉDÉ DE FABRICATION D'UN FIL MÉTALLIQUE À DEUX COUCHES EN ALLIAGE À BASE D'OR ET EN ARGENT

(30) Priority: 02.05.2018 IT 201800005009
(43) Date of publication of application: 10.03.2021
(73) Proprietor: Del Pia S.r.l., 52048 Monte San Savino (AR) (IT)
(72) Inventor: DEL PIA, Giorgio, 52100 Arezzo (IT); DEL PIA, Alfredo, 52100 Arezzo (IT); DEL PIA, Stefano, 52100 Arezzo (IT)
(74) Representative: Fabbriciani, Simone
(86) International application number: PCT/IB2019/000261
(87) International publication number: WO 2019/211660

(56) References cited:
- EP-A1- 0 638 256
- DE-A1- 2 829 284
- IT-B1- 1 399 133
- US-A1- 2005 005 449
- US-B1- 6 381 942

## Description

### Technical field

The present invention relates to a method for manufacturing a two-layer metal wire, made of a gold-based alloy and of silver.

### Background art

Precious metal jewels which are increasingly cheaper and versatile are becoming more and more demanded on the market, thus forcing the manufacturers in this industry to focus on lightness or on coating less expensive base metals with even nobler metals, such as gold and platinum, which have a higher resistance to oxidation.

A method for manufacturing a two-layer metal wire described in the patent IT1399133, filed by the same Applicant and involving coupling an outer metal tube to an inner metal tube, welding the two tubes to form a tubular element with two metal layers, and then coupling a low melting metal tube, typically made of copper or of an alloy thereof, with the inner cavity of the tube with two metal layers, is known.

The innermost surface with respect to the axis of symmetry of the two-layer tubular element thus obtained is then welded to the outer surface of the low-melting material to form a tubular element with three metal layers having a low-melting core and the surface coating made of the same material as the outer metal tube.

After the final drawing, the resulting three-layer metal wire is emptied of the low-melting material.

However, a coating of this type results in many machining waste products, due to the fact that gold, or the alloys thereof, and silver, and the alloys thereof, do not have an exceptional affinity.

Other methods for manufacturing a two-layer metal wire, in particular made of a gold-based alloy and of silver, are disclosed in documents US 2005/005449 A1, DE 2829284 A1 and EP 0638256 A1. In document US 2005/005449 A1, a commonly known brazing operation between an outer gold tube and an inner silver tube is disclosed.

### Objects and Summary of the Invention

The intended aim of the invention is to overcome the drawbacks reported above in known types of the method for manufacturing a two-layer metal wire, made of a gold-based alloy and of silver, which allows to manufacture a wire which has a gold-based alloy coating on a silver matrix resistant to the wearing effect of time and oxidation.

Within the scope of the aforementioned aim, an intended object of the method according to the invention is to implement an embodiment method which minimizes the machining waste products.

Another object of the method for manufacturing a metal wire according to the invention is to be easy and cost-effective.

Another object of the method according to the invention is to manufacture a two-layer metal wire, made of a gold-based alloy and of silver, which allows the wire to undergo every type of machining, even a beating with bulky tools.

Another intended object of the invention is to allow the two-layer metal wire to be processed without the risk of separating the gold-silver interface, avoiding anaesthetic bubbles, scratches, scrapings, scrapes and any other kind of surface flaws.

Not least, an object of the invention is to implement a method for manufacturing a two-layer metal wire, made of a gold-basec alloy and of silver, with means that are readily available on the market, as well as using common machinery and standard materials, so that the jewel, the final product of the method according to the invention, is economically competitive.

### Brief Description of the Invention

This aim and the other objects are achieved by a method for manufacturing a two-layer metal wire, made of a gold-based alloy and of silver, according to claim 1.

First of all, it is understood that the terms "inner" and "outer" refer to relation with the axis of symmetry of the tubular element formed by at least the three metal layers comprised of the outer metal tube, the first binding thickness (low melting metal) and the inner metal tube and, therefore, the innermost parts will be those closest to this axis (and therefore at the centre of the tubular element), while on the contrary the outermost parts will be those furthest from the same axis of symmetry.

According to the invention, the method comprises the step of removing the low-melting metal material from said compound metal wire to obtain a two-layer metal wire.

In this case, any material, whether metallic or non-metallic, having a liquefying temperature lower than the melting temperature of the metals selected for the inner and outer tubes is to be considered as low-melting. The Applicant has noticed that the precious metal alloys, the gold-, platinum- or silver-based ones, have a large part of the layers made of copper or other alloying metals. For example, the Au-14kt alloy (14-karat gold alloy) has a fineness of 585 thousandths of a gram of pure (or fine) gold to a gram of total alloy, while the other 415 mg. are alloying metals. Similarly, the silver and copper alloy that typically has at least 725 milligrams of pure silver for each gram of total alloy and is referred to as Ag725 (silver 725), has about 275 mg. of copper for each gram of alloy.

A known feature of these alloying metals is that they are chemically compatible with metals or metal alloys which contain the same chemical element.

The Applicant has noticed that by interposing a thickness of low melting material made of copper, the interpenetration of the metal particles of the outer tube with the metal of the inner tube is facilitated.

According to the invention, a copper thickness is interposed to an Au-14kt outer tube and to an Ag725 inner tube, and the electron microscope confirms the actual migration of some gold particles into the silver layer and vice versa, determining a weld between the two tubes.

For this reason, the low-melting metal material is eliminated from view, and therefore, the first binding thickness is considered as removed, as it cannot have a thickness consistency anymore.

According to the invention, the welding of the first binding thickness to the outer tube and the inner tube is performed in a furnace provided with belt conveyors defining a movement direction. The furnace has a first combustion chamber and a second combustion chamber at different temperatures.

The Applicant has observed that the heat of the furnace causes the particles of the first binding thickness to migrate so as to make them interpenetrate into the outer and inner metal tubes and, similarly, the particles of the tubes merge with those of the first binding thickness, so that the low- melting material is eliminated visually, this first binding thickness is removed from the user's eye, even if a microscopic analysis will detect that this low- melting material is still present in the two tubes, but not concentrated in a certain area to form a layer or a thickness.

A variant of the process just described involves coupling a support thickness inside the inner tube, so as to allow a smooth and effective drawing. Advantageously, in a variant not forming part of the claimed invention, the outer surface of the support thickness is welded to the inner face of the inner metal tube so as to form a tubular element consisting of four metal layers.

Advantageously, the support thickness is welded to the inner tube after that the first binding thickness is welded to the outer and inner tubular elements.

In a variant not forming part of the claimed invention, the tubular element with the four metal layers (outer tube, first binding thickness, inner tube and support thickness) is subjected to a first drawing before being coupled to the binding support thickness, so as to be compacted and work hardened.

Obviously, the drawing can also be carried out without the support thickness, but in this case not only the thicknesses of the tubes will be thicker, but it will be difficult to obtain a homogeneous and compact metal wire.

The first drawing consists of the forced passage of the two-or four-layer tubular element inside at least one hole along the drawing direction.

In the event the support thickness is used, it must then obviously be removed, with methods known per se.

If, for example, the support thickness is a wax, it can be removed inside the furnace at a temperature sufficient to let the wax drip, or in water if the wax is water soluble.

By contrast, if the thickness is a metal such as copper or aluminium, it can be eliminated with an acid action (emptying).

Should such thickness be composed of salts, then a washing will be enough to eliminate it.

### Brief Description of the Drawings

Further features and advantages of the invention will be more apparent from the description of a preferred but not exclusive embodiment of the method for manufacturing a two-layer metal wire, of a gold-based alloy and of silver, illustrated by way of non-limiting illustration with the aid of the accompanying drawings, wherein:
Figure 1 shows the tubular element 7 with three metal layers, in a perspective view with a sectioned portion;
Figure 2 shows the tubular element 107 with four metal layers, in a perspective view with a sectioned part;
Figure 3 shows the drawing of the tubular element 9 in Figure 1, with a dashed section in the wire 5;

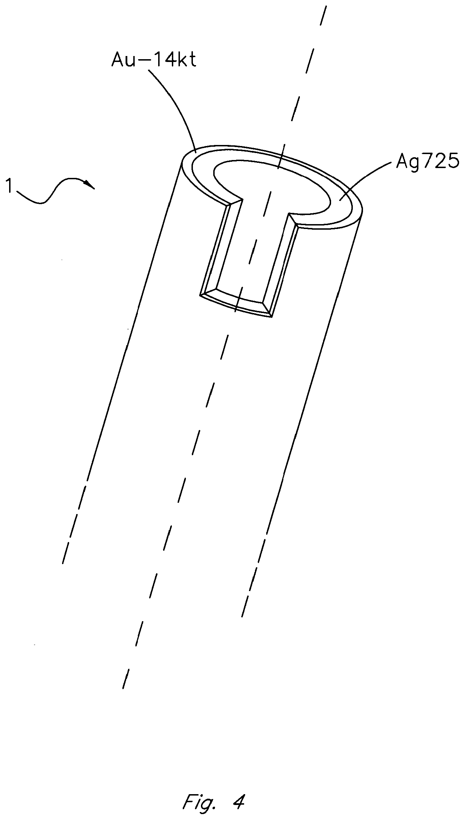

Figure 4 shows the two-stage metal wire produced with the manufacturing method according to the invention.

### Detailed Description of One or More Preferred Embodiments of the Invention

With reference to the mentioned figures, a preferred embodiment of the method for manufacturing a two-layer metal wire, comprises a succession of steps as described in claim 1.

In our manufacturing solutions, the outer metal tube is always a gold-based alloy having a fineness of 750/1000 (Au-14kt), with a thickness substantially in the range of mm. 0.10-0.20.

The inner metal tube is instead a silver 725 (Ag725) alloy of variable thickness ranging from about 1.00 to 2.80 millimetres.

The binding thickness 3 of both of the implementing examples presented herein is made of copper (Cu) and has a thickness 3 preferably in the range of 0.6 to 0.9 mm, including the ends, even more preferably in the range of 0.7 to 0.8 mm, including the ends, in our case it is substantially equal to 0.75 mm.

Following the welding, the thickness 3 is eliminated from view.

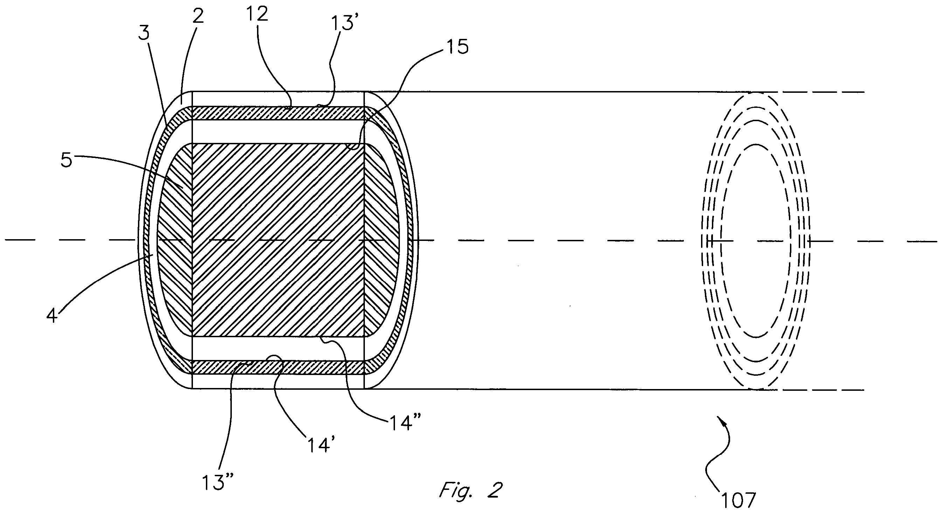

In the embodiment of Figure 2, there is the support thickness 5, also made of copper (Cu), which has a minimum size of about 1.5 mm, since during the intermediate operations it acts as a support core for the four-layer metal wire 9 obtained from drawing. Following the design of the metal alloy which forms the outer and inner tubular elements, as well as the fineness of the base alloying material and the thicknesses, the alloy metals are placed in the casting machine and then in the moulding machine which produces the metal plate of Au-14kt or Au- 18kt and Ag725.

In lathe machining, the plate takes on the desired thickness and then is passed to the profiling machine which, by means of an argon welding, allows to obtain the desired tube.

These series of operations for forming the outer 2 and inner 4 tubes are known per se.

Before coupling the outer tube 2, made of an Au-14kt gold-based alloy, to the inner tube 4 made of Ag725, it is preferable to proceed with a cleaning of the outer surface of the inner tube 4, for example by milling, so as to eliminate the oxides formed on the surface and / or the residues of previous processes.

The coupling of the outer 2, inner 4 tubes and with the binding thickness 3 is achieved by the passage of the two tubes one within the other, for example through a drawing plate having a hole with a diameter equal to the outer diameter of the outer tube.

According to the invention, the welding of the first binding thickness 3 to the outer tube 2 and to the inner tube 4 takes place in a furnace provided with belt conveyors defining a movement direction, which, for example, can coincide with the direction defined by the axis of symmetry 10 (or 110) of the tubular element 7 (or 107).

The furnace also has a first combustion chamber and a second combustion chamber, having different temperatures: the first chamber has a temperature of about 770°C, the temperature of the chamber is substantially 775°C.

By changing the speed of the belts, the time spent in the furnace varies, and, in this way, it is possible to optimize the welding so that the metal layers 2, 3 and 4 are steadily associated, while avoiding overheating the material too much. After many attempts, it was calculated that the optimum rotational speed of the belt is 150 rpm, equal to a residence time in a furnace along outer meters, of about 10 minutes.

In the case wherein the gold-based alloy is of the Au-18kt type, the temperatures of the first and second combustion chambers would be respectively about 780 and 770°C, while the rotational speed of the belt would consequently increase so as to have a residence time in a furnace for example of 2 meters, of about 13 minutes.

In the case wherein it is decided to resort to the support thickness 5, to be internally coupled to the inner tube 4, the outer surface 15 of the support thickness 5 is welded to the inner surface 14"of the inner metal tube 4 so as to form a tubular element 107 composed of three metal layers. The process proceeds as follows.

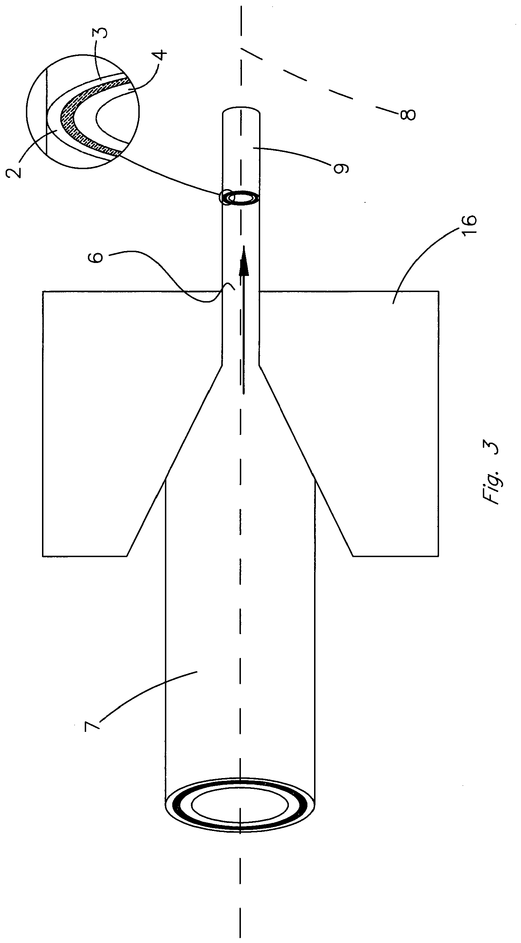

After the outer tube 2 in Au-14kt (or Au-18kt), the binding thickness 3 in copper (Cu) and the inner tube 4 in Ag725 have been coupled and welded together to form the three-layer tubular element 7 (in Au-14kt+Cu+Ag725 or Au-18kt+Cu+Ag725), the latter undergoes a first drawing, before being coupled with the low melting point material, so as to be compacted and work hardened. This first drawing can consist of the forced passage, normally cold, of the two-layer tube inside a hole along the drawing direction (fig. 3).

The coupling of the low-melting element 5 with the inner cavity of the tubular element 7 is also carried out by passing them one inside the other through another drawing plate, which this time has a hole with a diameter equal to the outer diameter of the three-layer tube 7.

The welding of the two-layer tubular element 7 and of the low-melting element 5 is also carried out in a second furnace completely similar to the aforementioned oven, again by means of belt conveyors. The reference temperatures for the combustion chambers of the second furnace may vary in this case between 780 and 850°C.

It can obviously be provided that the welding of the two-layer tube 7 with the low-melting one 5 takes place precisely in the same furnace used for welding the outer and inner tubes, with the precaution of increasing the temperatures of the combustion chambers.

With reference to figure 3, the final drawing consists in passing the tubular element 7 or 107 through a series of holes 6, defined in the draw 16, along the final drawing direction 8. Each of these holes 6 has a diameter which is gradually lower than the diameter of the next hole.

The metal wire 9 thus obtained with two or three layers (depending on whether it starts from tube 7 or 107) is passed to the machine tools so as to obtain a machined wire of the desired aesthetic shape.

In the variant embodiment which provides the three-layer wire 9, it will be necessary to eliminate the low-melting metal material (copper or alloys thereof) from the wire 9 by immersing the machined wire in a emptying bath, where the copper, liquefying, goes into solution and subsequently the machined wire already emptied is passed to the finishing operations so as to obtain the two-layer metal wire 1.

For example, if machining of the wire 1 is performed to manufacture a chain, the two- or three-layer wire 9 is cut so as to obtain small meshes which, once emptied and cleaned, can be connected together to form a chain.

As said, if the support thickness is a salt, it can be eliminated by means of a mixture of salts diluted in water containing iron polyamide in a concentration varying substantially from 30 to 50% and a mixture of corrosion inhibitors in a maximum concentration of 5%. For example, the solution used may be the one commercially known as ADIX118.

Dilution in water allows silver to form the surface oxide which prevents acid corrosion.

Preferably, the dilution in water provides an amount of distilled water, on the total volume, of not less than 15% and not more than 30%.

In particular, in the examples proposed here, the dilution in water in the case wherein the wire to be machined contains the 14 carat gold alloy (Au-14kt+Cu+Ag725(+Cu)) varies from 25% to 30%, while for 18 carat gold alloys (Au-18kt+Cu+Ag725(+Cu)), the percentage of distilled water will decrease up to a range comprised between 18% and 25%.

The dissolution temperature varies between 80 and 70°C, the minimum time taken to eliminate the thickness is about 24 hours and the maximum time does not exceed 40 hours.

Finally, it is important to note that, by increasing the fineness of the gold-based alloy, or its thickness, the furnace welding temperatures will increase, while the residence time and the dilution in water in the furnace of the solution to form the dissolution bath will decrease.

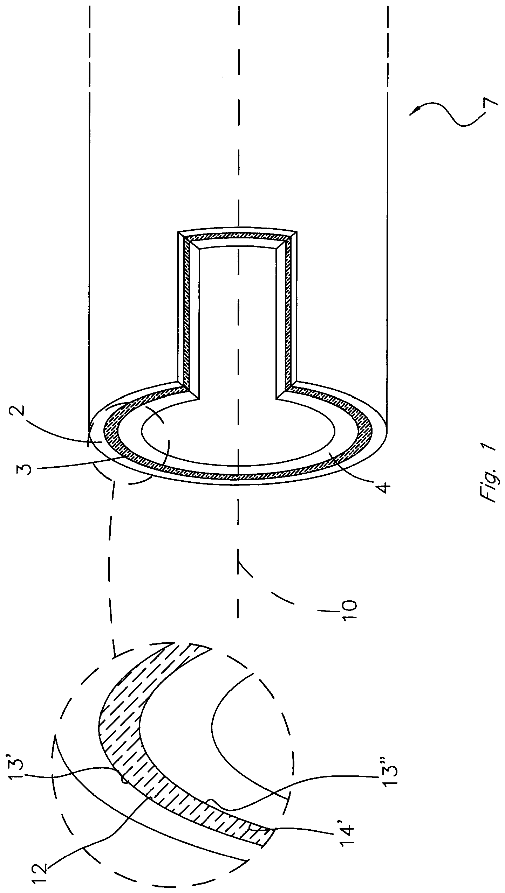

The tubular element (with three layers) 7 and (with four layers) 107 is a semi-finished tubular element which has at least three metal layers and comprises a outer metal tube 2, an inner metal tube 4 and a first binding thickness 3 interposed between the outer metal tube 2 and the inner metal tube 4 (fig. 1) .

An embodiment variant (fig. 2) is to have a support thickness 5 inside the inner metal tube 4.

From what has been described above, it can therefore be seen that the invention achieves the intended aim and objects, and in particular it is underlined that a method for manufacturing a two-layer metal wire, made of a gold-based alloy and of silver, which allows to manufacture a two-stage metal wire, with a gold-based alloy coating on a silver matrix resistant to the wearing effect of time and oxidation, is provided.

In particular, having thought of a copper thickness as a binder between the upper metal layer in gold alloy and lower, in silver alloy, allows to obtain an extremely stable binding between the two steps, reducing the machining waste products.

Another advantage of the invention is that since the two-stage metal wire is obtained from a metal wire with three or more layers, it is possible to think of any type of possible machining, avoiding the risk of separation of the gold-based alloy interface and silver inner part, avoiding flaking problems, scratches, bubbles or other surface imperfections. Another advantage of the method for manufacturing a metal wire according to the invention is to be easy and cost-effective.

Moreover, the low-melting layer(s) of the tubular element can be easily eliminated after the desired machinings. This allows to obtain a gold-plated silver chain of any shape and consistency, resistant over time and to any type of environment.

Not a least advantage of the invention is that the method for manufacturing the two-stage metal wire is carried out with means that are readily available on the market and with the use of common machinery and standard materials; in this way the final product is economically competitive.

The so-designed invention is susceptible of numerous modifications and variations, without departing from the scope of the appended claims.

## Claims

1. Method for the manufacturing of a two-layer metal wire (1), made of a gold-based alloy and of silver, comprising a succession of steps comprising:
- coupling a gold-based alloy of Au-18kt type or of Au-14kt type outer metal tube (2) to a silver alloy of Ag725 type inner metal tube (4) by interposing a first binding thickness (3) made of copper (Cu),
- welding in a furnace equipped with belt conveyors defining a movement direction, said furnace having a first combustion chamber and a second combustion chamber at different temperatures, the inner surface (12) of said outer metal tube (2) to the outer surface (13') of said first binding thickness (3) and the inner surface (13") of said first binding thickness (3) to the outer surface (14') of said inner metal tube (4) in order to firmly associate said outer tube (2) and said inner tube (4) together, wherein some gold particles migrate into the silver layer and vice versa and the heat of the furnace causes the particles of the first binding thickness to migrate so as to make them interpenetrate into the outer and inner metal tubes and, similarly, the particles of the tubes merge with those of the first binding thickness so that the first binding thickness is removed from the user's eye thereby forming a tubular element (7, 107) having two metal layers,
- optionally coupling a support thickness (5) internally to said inner tube (4), wherein, preferably, the outer surface (15) of said support thickness (5) is welded to the inner face (14") of said inner metal tube (4) so as to form a tubular element (107) consisting of three metal layers, and
- drawing, by means of a final drawing process, said tubular element (7, 107) to obtain a compound metal wire (9) made of two or three metal layers

2. Method according to claim 1, wherein the size of said first binding thickness (3) is comprised between 0.6 and 0.9 mm, including the ends, preferably between 0.7 and 0.8 mm, including the ends, even more preferably substantially equal to 0.75 mm.

3. Method according to claim 1 or 2, wherein said tubular element (7) with two layers undergoes a first drawing before being coupled with said support thickness (5), said first drawing consisting in the forced passage of said tubular element (7) inside at least one hole (6) along said drawing direction (8).

4. Method according to anyone of claims 1-3, wherein said support thickness (5) is a wax or a metal, preferably a copper- or aluminium- based alloy, or salts.

## Patentansprüche

1. Verfahren zur Herstellung eines zweischichtigen Metalldrahtes (1) aus einer goldbasierten Legierung und aus Silber, umfassend eine Abfolge von Schritten, umfassend:
- Koppeln eines äußeren Metallrohrs (2) aus einer goldbasierten Legierung des Typs Au-18kt oder des Typs Au-14kt an ein inneres Metallrohr (4) aus einer Silberlegierung des Typs Ag725 unter Zwischenlage einer ersten Bindungsdicke (3) aus Kupfer (Cu),
- Schweißen in einem Ofen, der mit Bandförderern ausgestattet ist, die eine Bewegungsrichtung definieren, wobei der Ofen eine erste Brennkammer und eine zweite Brennkammer bei unterschiedlichen Temperaturen aufweist, der inneren Oberfläche (12) des äußeren Metallrohrs (2) mit der äußeren Oberfläche (13') der ersten Bindungsdicke (3) und der inneren Oberfläche (13") der ersten Bindungsdicke (3) mit der äußeren Oberfläche (14') des inneren Metallrohrs (4), um das äußere Rohr (2) und das innere Rohr (4) fest miteinander zu assoziieren, wobei einige Goldpartikel in die Silberschicht und umgekehrt wandern und die Hitze des Ofens bewirkt, dass die Partikel der ersten Bindungsdicke wandern, um sie in das äußere und innere Metallrohr eindringen zu lassen, und in ähnlicher Weise dass die Partikel der Rohre mit denen der ersten Bindungsdicke verschmelzen, so dass die erste Bindungsdicke aus dem Auge des Benutzers entfernt wird, wodurch ein rohrförmiges Element (7, 107) mit zwei Metallschichten gebildet wird,
- wahlweise Koppeln einer Stützdicke (5) innen an das Innenrohr (4), wobei vorzugsweise die äußere Oberfläche (15) der Stützdicke (5) mit der inneren Fläche (14") des inneren Metallrohrs (4) verschweißt ist, um ein rohrförmiges Element (107) zu bilden, das aus drei Metallschichten besteht, und
- Ziehen des rohrförmigen Elements (7, 107) mittels eines abschließenden Ziehprozesses, um einen Verbundmetalldraht (9) zu erhalten, der aus zwei oder drei Metallschichten hergestellt ist.

2. Verfahren nach Anspruch 1, wobei die Größe der ersten Bindungsdicke (3) zwischen 0,6 und 0,9 mm einschließlich der Enden, vorzugsweise zwischen 0,7 und 0,8 mm einschließlich der Enden, noch bevorzugter im Wesentlichen gleich 0,75 mm beträgt.

3. Verfahren nach Anspruch 1 oder 2, wobei das rohrförmige Element (7) mit zwei Schichten einem ersten Ziehen unterzogen wird, bevor es mit der Stützdicke (5) gekoppelt wird, wobei das erste Ziehen darin besteht, dass das rohrförmige Element (7) in mindestens einem Loch (6) entlang der Ziehrichtung (8) zwangsgeführt wird.

4. Verfahren nach einem der Ansprüche 1-3, wobei die Stützdicke (5) ein Wachs oder ein Metall, vorzugsweise eine Legierung auf Kupfer- oder Aluminiumbasis, oder Salze ist.

## Revendications

1. Procédé de fabrication d'un fil métallique à deux couches (1), en alliage à base d'or et en argent, comprenant une succession d'étapes comprenant :
- coupler un tube métallique extérieur (2) en alliage à base d'or de type Au-18kt ou de type Au-14kt à un tube métallique intérieur (4) en alliage d'argent de type Ag725 en interposant une première épaisseur de liaison (3) en cuivre (Cu),
- souder, dans un four équipé de transporteurs à courroie définissant une direction de mouvement, ledit four comportant une première chambre de combustion et une deuxième chambre de combustion à des températures différentes, la surface intérieure (12) dudit tube métallique extérieur (2) à la surface extérieure (13') de ladite première épaisseur de liaison (3) et la surface intérieure (13") de ladite première épaisseur de liaison (3) à la surface extérieure (14') dudit tube métallique intérieur (4) afin d'associer fermement ledit tube extérieur (2) et ledit tube intérieur (4) ensemble, dans lequel certaines particules d'or migrent dans la couche d'argent et vice versa et la chaleur du four provoque la migration des particules de la première épaisseur de liaison de manière à les faire s'interpénétrer dans les tubes métalliques extérieur et intérieur et, de même, les particules des tubes fusionnent avec celles de la première épaisseur de liaison de sorte que la première épaisseur de liaison est retirée de l'œillet de l'utilisateur, formant ainsi un élément tubulaire (7, 107) comportant deux couches métalliques,
- éventuellement, coupler une épaisseur de support (5) à l'intérieur dudit tube intérieur (4), dans lequel, de préférence, la surface extérieure (15) de ladite épaisseur de support (5) est soudée à la face intérieure (14") dudit tube métallique intérieur (4) de manière à former un élément tubulaire (107) constitué de trois couches de métal, et
- tréfiler, au moyen d'un procédé de tréfilage final, ledit élément tubulaire (7, 107) pour obtenir un fil métallique composé (9) constitué de deux ou trois couches métalliques.

2. Procédé selon la revendication 1, dans lequel la taille de ladite première épaisseur de liaison (3) est comprise entre 0,6 et 0,9 mm, extrémités comprises, de préférence entre 0,7 et 0,8 mm, extrémités comprises, encore plus préférablement sensiblement égale à 0,75 mm.

3. Procédé selon la revendication 1 ou 2, dans lequel ledit élément tubulaire (7) à deux couches subit un premier tréfilage avant d'être accouplé à ladite épaisseur de support (5), ledit premier tréfilage consistant dans le passage forcé dudit élément tubulaire (7) à l'intérieur d'au moins un trou (6) le long de ladite direction de tréfilage (8).

4. Procédé selon l'une quelconque des revendications 1-3, dans lequel ladite épaisseur de support (5) est une cire ou un métal, de préférence un alliage à base de cuivre ou d'aluminium, ou des sels.
